# FASCICULE DE BREVET EUROPEEN

(11) **EP 1 058 360 B1**
(45) Date de publication et mention de la délivrance du brevet: **29.08.2001**
(21) Numéro de dépôt: 99440126.3
(22) Date de dépôt: 31.05.1999
(51) Int. Cl.: H02B 1/052

(54) **Système de fixation à grande course d'un appareil électrique modulaire standard à un rail**
yefestigungssystem mit grossem Hub für ein modulares elektrisches Gerät an einerSchiene
Attachment system with big stroke for a modular electrical apparatus on a rail

(43) Date de publication de la demande: 06.12.2000
(73) Titulaire: HAGER ELECTRO S.A., 67215 Obernai (FR)
(72) Inventeur: Vogler, Thomas, 67210 Obernai (FR); Weyh, Sébastien, 67600 Kintzheim (FR)
(74) Mandataire: Littolff, Denis

(56) Documents cités:
- DE-A- 4 107 075
- FR-A- 2 678 768

## Description

La présente invention concerne un système de fixation d'un appareil électrique modulaire standard à un rail, ainsi que les appareils qui en sont munis. Ces appareils, tels que des disjoncteurs, sont classiquement fixés sur des rails normalisés à deux bordures d'accrochage qui coopèrent d'une part directement avec leur semelle et d'autre part avec un loquet de fixation qui assure d'une part le verrouillage de l'appareil sur le rail et permettent d'autre part leur clipsage à l'accrochage.

Dans la plupart des cas, la semelle comporte vers l'une de ses extrémités longitudinales un relief doté d'une encoche dans laquelle s'ajuste l'une des bordures du rail, et vers l'autre extrémité un autre relief supportant le loquet qui bloque l'autre bordure du rail. Le loquet se compose principalement d'un coulisseau dont la partie destinée à venir au contact de ladite bordure recrée en réalité, en combinaison avec la configuration de la portion de semelle. directement en contact avec le rail, une sorte de seconde encoche opposée à la première et bloquant le dispositif modulaire sur le rail.

Cette seconde encoche est escamotable, car le coulisseau peut se déplacer de manière à libérer la bordure du rail de son emprise, pour permettre l'extraction de l'appareil modulaire. En général, des moyens de rappel en position verrouillée sont adjoints au coulisseau, qui permettent en outre le clipsage sur le rail. Lorsque l'encoche escamotable est au repos, la distance séparant les fonds des deux encoches est sensiblement égale à la largeur du rail normalisé. Par conséquent, lorsqu'on veut enlever un appareil de son rail, il faut dans un premier temps déplacer le coulisseau afin de supprimer l'encoche escamotable, et opérer ensuite un pivotement autour d'un axe se situant au niveau du fond de l'autre encoche.

Lorsque la rotation amène la bordure libérée à une distance de la semelle qui est supérieure à la hauteur de l'encoche amovible, comprenant celle d'un éventuel relief de la semelle et celle du coulisseau, on peut sortir l'appareil du rail en effectuant une translation transversalement audit rail pour le sortir de l'encoche pratiquée dans le relief permanent de la semelle.

Le coulisseau comporte, dépassant du boîtier de l'appareil modulaire et accessible à l'utilisateur, un talon de manipulation qui permet de l'entraîner en position ouverte, à l'aide d'un outil s'adaptant audit talon. Pour désolidariser le rail du dispositif, il faut toutefois synchroniser l'escamotage de l'encoche amovible et la rotation autour de l'autre encoche, de manière que lorsque le coulisseau est rappelé en position de repos, la bordure du rail soit déjà libérée. Il est alors possible de retirer l'appareil modulaire du rail auquel il est fixé, en réalisant le double mouvement circulaire et translatif précité. Cette synchronisation n'est pas nécessaire lorsque le coulisseau comporte une position stable escamotée.

Ce type de loquet conduit à un verrouillage classique que l'on peut considérer comme efficace. Cependant, le déverrouillage et surtout l'extraction d'un élément parmi une série de dispositifs modulaires accolés les uns aux autres sur un rail posent un problème particulier. En effet, les. rangées d'éléments modulaires peuvent être raccordées à des barres ou peignes de pontage destinés à relier entre elles les bornes correspondant aux mêmes phases ou au neutre.

Ces peignes ou barres de pontage, lorsqu'ils sont du même côté que le talon de manipulation des loquets, limitent considérablement la mobilité des appareils car, selon leur structure, leurs languettes, dents ou encore la barre proprement dite pénètrent dans les bornes de connexion et empêchent la réalisation complète du double mouvement circulaire et translatif. Même en ouvrant de manière maximale la borne de connexion, la course rotative n'est pas suffisante pour dégager l'appareil du rail afin d'initier le mouvement translatif. Il faudrait en principe enlever le peigne ou la barre pour autoriser une rotation suffisante.

Retirer le peigne pour extraire un appareil d'une rangée impose cependant de dévisser les vis de serrage des bornes de tous les appareils de la rangée, et nécessite un temps considérable. Cette solution n'est évidemment pas admissible en terme de commodité d'utilisation, et doit à ce titre être écartée, au profit d'une solution permettant d'extraire un seul appareil en ne dévissant que la vis de sa propre borne de connexion reliée au peigne de pontage. Cette solution permet en outre d'assurer la continuité du service : l'installateur n'a plus besoin de couper l'alimentation générale pour changer un disjoncteur, ce qui constitue un avantage pratique déterminant. Pour enlever un seul appareil d'une rangée, il faut en fait pouvoir effectuer un mouvement de translation vers le haut pour l'extraire des dents.

Avec les loquets classiques, le support du coulisseau constitue évidemment un obstacle à ce mouvement translatif de dégagement, de même que le faible débattement dudit coulisseau, qui ne s'efface pas et ne dégage pratiquement pas de surface sur la semelle qui puisse permettre un éventuel déplacement transversalement au rail.

On a donc cherché des solutions permettant principalement de dégager une plus grande surface sur la semelle, afin d'extraire plus aisément l'appareil des dents du peigne.

Ainsi, le brevet allemand référencé DE-A-4 011 447 A1 au nom de ABB Patent décrit un système de verrouillage basé sur un loquet amovible par coulissement, et dont le dispositif de rappel autorise au moins deux positions de repos. Le coulisseau, destiné à bloquer le rail normalisé en position de verrouillage, coopère avec un ressort à boudin, dont l'une des extrémités est fixée au corps dudit coulisseau, alors que la seconde extrémité est fixée à une excroissance prévue à cet effet dans la semelle. En position de verrouillage, le ressort de compression fait un angle aigu avec la normale à la semelle, et plaque le coulisseau contre la bordure du rail.

Lorsqu'on exerce une action sur le coulisseau, de manière à libérer le rail, on passe par un point dur qui correspond à ladite normale à la semelle, puis le ressort tend à repousser le coulisseau en position d'ouverture maximale en inversant l'angle qu'il fait par rapport à celle-ci. Cette solution comporte par conséquent 3 points de repos, dont deux seulement (les deux positions extrêmes) sont stables. .

L'accrochage d'un ressort à boudin par ses extrémités impose des contraintes de fabrication particulières pour le coulisseau et la semelle, qui doivent présenter des configurations permettant le double accrochage. Ces configurations compliquent la forme des éléments participant aux liaisons, et augmentent les coûts de fabrication. Le montage du dispositif complet révèle un inconvénient encore plus pénalisant : la double fixation du ressort au coulisseau et à la semelle rend plus difficile toute possibilité d'automatisation complète de l'assemblage. Une- intervention humaine est donc nécessaire dans la chaîne, coûteuse en temps et en main d'oeuvre.

De plus, la partie de la semelle qui supporte le coulisseau est proéminente par rapport à la surface de la semelle sur laquelle s'appuie le rail. La libération de surface pour le déplacement relatif rail / semelle en liaison avec la solution choisie pour le coulisseau est bien réelle mais reste toutefois relativement limitée. Il ne peut donc que s'agir d'une solution intermédiaire entre les appareils traditionnels et une conception dont la mise en oeuvre serait d'une plus grande souplesse et autoriserait toute facilité de maniement dans l'opération d'extraction.

Selon une autre possibilité, le dispositif divulgué dans le brevet EP 507893 au nom de KOPP GmbH comprend un loquet pivotant autour d'un axe situé à distance de la semelle proprement dite, et orienté parallèlement au rail de fixation. Ce dispositif, bien que plus compliqué à mettre en place et nécessitant un boîtier particulier, satisfait en principe à l'exigence de la libération sur la semelle d'une surface supplémentaire suffisante à permettre une translation confortable. La configuration du loquet, pivotante, impose des contraintes particulières liées à cette géométrie rotative.

D'autres produits disponibles sur le marché présentent un grave inconvénient dans le fait qu'ils sont dépourvus de butée permettant de maintenir l'appareil sur le rail sans pour autant mettre le loquet sous contrainte, lorsqu'ils sont soumis à une sollicitation extérieure visant à les détacher. Or, il s'agit là d'une fonction essentielle, dans la mesure où ce genre d'appareil peut subir de fortes contraintes, de nature à le déclipser si le loquet est seul à les encaisser, sauf à surdimensionner ledit loquet de manière déraisonnable par rapport au reste du dispositif, où à concevoir un système de verrouillage puissant qui rendrait alors cependant son extraction probablement problématique. De telles contraintes surviennent notamment lorsqu'on effectue un serrage de la borne de connexion, en exerçant un couple sur la vis équipant ladite borne. La réaction du rail, s'exerçant directement sur le loquet, peut aboutir à le déverrouiller.

Pour ces dispositifs, le loquet est verrouillé par clipsage au moment de la fixation sur le rail, et se -déverrouille simplement sous la poussée de l'utilisateur perpendiculairement au rail lorsqu'il veut l'extraire.

La fixation n'est donc pas totalement fiable.

Cet inconvénient est résolu par l'appareil décrit dans le modèle d'utilité allemand référencé DE-U-87 04 212-6 déposé par la société GEYER GmbH, qui propose une solution basée sur deux pièces coopérant avec la semelle de l'appareil, dont l'une comporte des butées de maintien axiales mobiles selon un mouvement indépendant de celui de la butée de clipsage.

Ladite butée de clipsage fait partie du loquet qui coulisse entre deux positions stables. Un organe élastique coopérant avec le loquet et la semelle facilite le passage de l'une à l'autre desdites positions stables.

Les butées de maintien sont solidaires d'une pièce pivotant autour d'un axe transversal à la semelle, dotée d'un mécanisme élastique qui rappelle les butées en position de blocage. En principe, des cames fixées au loquet coulissant déverrouillent ces butées au cours de la première partie du coulissement, puis les libèrent.

La solution proposée fait appel à un système mécaniquement assez complexe puisque, outre lesdites deux pièces, il y a au moins un organe élastique, et son montage ne peut en tout état de cause pas être facilement automatisé. En outre, elle ne libère sur la semelle qu'un espace de surface moyenne insuffisant pour garantir un confort d'utilisation dans toutes les situations d'extraction, car la semelle présente un épaulement servant notamment au montage de l'arbre de la pièce pivotante.

Cette solution a cependant le mérite de résoudre l'une des difficultés majeures à laquelle le concepteur est confronté lors de la mise au point d'un - loquet coulissant suivant une grande course dans l'axe principal de la semelle : garantir en position verrouillée une tenue mécanique aux contraintes exercées par le rail sur la butée de clipsage qui soit identique à celle des dispositifs existants, lesquelles ne permettent cependant pas de réaliser ladite grande course axiale et peuvent s'appuyer sur des butées pratiquées dans la semelle.

Alors que dans les dispositifs mentionnés auparavant, une unique butée assure l'escamotabilité et est supposée offrir en même temps la résistance à ces contraintes, la solution GEYER propose pour la première fois la dissociation des deux fonctions.

Elle souffre cependant encore à cet égard d'un inconvénient essentiel : les butées de maintien ne sont pas uniquement actives lorsque l'appareil est fixé sur son rail, mais à tout moment excepté un bref instant lorsque la ou les cames du loquet coulissant sont en action. Elles gênent par conséquent les déplacements relatifs rail / semelle, et imposent pour s'en affranchir une double action au niveau du talon de manipulation : extraction du loquet et déblocage des butées de maintien. Une telle exigence obère largement le niveau de commodité d'utilisation de la solution, et s'ajoute aux inconvénients précités.

Cette dissociation existe également dans la solution décrite dans le brevet référencé DE-A-35 13 762 au nom de SCHUPA, mais les butées de maintien, situées sur les glissières du disjoncteur, n'entrent en action qu'après un retrait de quelques millimètres du loquet, et ne sont donc pas totalement efficace du fait de l'existence de ce jeu.

L'invention propose de remédier à toutes les insuffisances des systèmes existants, en fournissant un disjoncteur muni d'un système de fixation de conception nouvelle, facile à manier et dégageant complètement une surface résiduelle de semelle suffisante, offrant à l'utilisateur une grande souplesse d'emploi. Le système proposé est en outre fiable et de mise en oeuvre facile et intuitive.

Un objectif de la présente invention est de permettre l'extraction facile d'un seul appareil à l'aide d'un nouveau système de fixation, quelle que soit la configuration de la rangée de dispositifs modulaires et le type de peigne ou de barre de connexion utilisé.

Un autre objectif de l'invention est de proposer un système dissociant le mouvement de la butée de clipsage destinée à effectuer une grande course, de celui des butées de maintien, qui ne doivent au surplus être actives qu'en position de fixation au rail.

Un objectif encore de l'invention est de dissocier l'opération de déblocage du système de la course de celui-ci, et par conséquent du fonctionnement de la butée de clipsage.

Enfin, le système de l'invention ne comporte qu'un nombre minimal de pièces indépendantes à assembler sur la semelle de l'appareil, au surplus suivant un montage particulièrement simple qui peut être automatisé.

Globalement, l'invention se présente comme le résultat de l'optimisation systématique des différentes fonctions techniques assurées par un système de fixation à grande course d'un appareil modulaire standard sur un rail profilé à bordures d'accrochage externes.

L'invention a plus particulièrement trait à un système de fixation mobile en translation entre une position verrouillée dans laquelle une butée escamotable permet la fixation par clipsage de l'appareil sur le rail, et une position déverrouillée dans laquelle ladite butée est coulissée à distance du rail à l'aide d'un talon de manipulation, afin que l'appareil puisse être déplacé en sens inverse du coulissement en vue de le démonter dudit rail, au moins un élément élastique du système coopérant lors de chaque déplacement du système avec la semelle de l'appareil, caractérisé en ce que ledit système comporte un sabot coulissant dans des glissières pratiquées dans la semelle, dans lequel est fixé un loquet muni d'une butée élastique de clipsage sur le rail capable d'un mouvement relatif par rapport au sabot indépendant du coulissement de ce dernier par rapport à la semelle.

De plus, le loquet est muni de moyens élastiques de blocage / déblocage de la position verrouillée, dont les déplacements relativement au sabot sont indépendants du coulissement du sabot et du déplacement axial de la butée escamotable.

Le système de l'invention réunit donc en seulement deux pièces distinctes les organes offrant, outre les fonctions d'un loquet classique, la possibilité de réaliser une grande course assurant la démontabilité d'un unique appareil ponté par un peigne de connexion.

L'indépendance des déplacements des éléments fonctionnels principaux garantit que les fonctions réalisées par lesdits éléments ne sont jamais parasitées par la réalisation d'une autre fonction.

La première pièce du système de l'invention est le sabot, qui présente une section d'allure en U dont les deux parois latérales sont surmontées au moins partiellement de rebords s'étendant vers l'intérieur du sabot, en vue de coopérer avec des glissières s'ouvrant latéralement dans la semelle du dispositif modulaire, une extrémité desdites glissières s'arrêtant à proximité du rail et l'autre extrémité débouchant dans la face de l'appareil munie d'une borne de connexion, la longueur du sabot et des glissières étant sensiblement identique.

De préférence, le rebord de chaque paroi latérale du sabot est configuré en deux portions distinctes, séparées par une zone qui en est dépourvue, l'une au moins des deux portions et la zone sans rebord ayant une longueur correspondant respectivement au plus à la longueur d'une encoche pratiquée dans un muret contenant la paroi externe de la glissière intégrée à la semelle et au moins à la longueur d'une portion contiguë dudit muret, en vue de permettre leur insertion par clipsage dans la glissière perpendiculairement au plan de la semelle.

Il existe de fait une correspondance entre les reliefs pratiqués dans la glissière et ceux du rebord du sabot, les zones pleines de l'un se retrouvant, en négatif, en creux dans l'autre, afin de permettre l'interpénétration.

De préférence encore, seule la portion de rebord rentrant placée du côté de la butée escamotable du loquet est prévue pour s'insérer dans l'encoche de la paroi de la glissière, dont la portion contiguë distale de ladite butée est de longueur correspondant au plus à celle de la zone sans rebord du sabot.

L'arrimage du sabot à la semelle se fait alors avec une partie du sabot dépassant de la semelle.

Pour faciliter l'insertion, la portion de rebord du sabot et l'encoche de la glissière destinées à coopérer sont munies de deux surfaces en regard chanfreinées orientées inversément pour venir au contact l'une de l'autre et permettre un guidage lors de l'insertion du premier dans la seconde.

Le clipsage est facilité par l'existence de ces deux surfaces qui glissent l'une sur l'autre et créent des efforts aboutissant à fléchir élastiquement les parois latérales du sabot pour permettre le clipsage des rebords dans les rainures latérales des glissières.

Selon l'invention, les moyens de blocage / déblocage de la position verrouillée sur le rail consistent en au moins une butée transversale équipant la portion du loquet munie à une de ses extrémités du talon de manipulation, l'autre extrémité présentant une liaison de pivotement élastique avec une partie du corps du loquet immobilisée entre le sabot et la semelle, ladite ou lesdites butées coopérant au repos avec au moins une contrebutée correspondante pratiquée dans la semelle.

Plus particulièrement, ces moyens comportent une butée transversale présentant une surface d'allure perpendiculaire au plan de la semelle, orientée vers le talon de manipulation, coopérant avec deux surfaces parallèles orientée en sens inverse des deux contrebutées de la semelle, ces dernières étant situées aux deux extrémités transversales de ladite semelle.

Le déblocage consiste donc simplement à décaler les surfaces de la butée et des contrebutées, par action sur le talon de manipulation, avant d'impulser le coulissement. Il y a en fait un double mouvement, puisque le déblocage nécessite un effort d'allure perpendiculaire à la semelle alors que le coulissement en nécessite un parallèle à cette dernière.

Pour le blocage, seul un coulissement inverse est nécessaire, l'élasticité de la portion munie de la butée réalisant automatiquement le déplacement perpendiculaire à la semelle inverse du précédent en vue de permettre la coopération entre la butée et les contrebutées.

Dans l'invention, la butée escamotable de clipsage sur le rail est une pièce élastique dont l'extrémité libre dépasse de l'enveloppe formée par le sabot, et est configurée pour autoriser un déplacement élastique rectiligne dans la direction axiale de la semelle.

Selon une possibilité, ladite pièce- comporte deux parois latérales axiales perpendiculaires au plan de la semelle et une paroi frontale formant un bec dont une surface est au contact du rail de fixation, lesdites parois entourant un organe élastique axial formant ressort, et présentant une hauteur égale à la distance séparant le sabot de la semelle.

Plus précisément, l'organe élastique formant ressort est un ruban de matériau synthétique d'épaisseur constante, d'une seule pièce avec lesdites parois latérales et frontale, présentant des ondulations d'amplitude égale à la hauteur des parois.

Ledit ressort est de préférence aussi d'une seule pièce avec le reste du loquet, auquel il est raccordé, ainsi qu'à la paroi frontale, au niveau du sommet d'une ondulation disposé au contact du fond du sabot.

Ce ressort ondulé en matériau plastique présente une grande souplesse et, notamment au niveau de sa liaison avec le loquet, peut absorber et restituer de l'énergie dans plusieurs directions. En pratique, un degré de liberté lui est laissé, comme indiqué auparavant. Le fond du sabot l'empêche en effet par exemple de subir une rotation autour d'un axe transversal parallèle au plan de la semelle, rotation qui pourrait s'avérer destructive.

Selon une configuration possible de l'invention, les moyens de fixer en translation le loquet dans le sabot comportent au moins deux plots dépassant des parois latérales du sabot vers l'intérieur de celui-ci, et s'insérant dans des logements correspondants du loquet.

De préférence, lesdits plots sont au nombre de deux, disposés l'un en face de l'autre à proximité de l'extrémité du sabot située dans la zone d'accrochage au rail.

De même, les logements du loquet sont pratiqués dans deux patins latéraux axiaux disposés au contact du fond du sabot, de part et d'autre de la pièce élastique formant butée escamotable et au contact des parois latérales dudit sabot. Ces patins sont munis à leur extrémité libre d'une surface externe chanfreinée perpendiculaire au plan de la semelle, destinée à coopérer avec une surface des plots en regard biseautée selon une orientation inverse pour réaliser une flexion desdits patins vers l'intérieur et effectuer la liaison par clipsage de chaque plot dans son logement correspondant.

La fixation du loquet dans le sabot se fait donc très simplement par coulissement du premier dans le second jusqu'à clipsage des plots dans les logements des patins. L'ensemble est ensuite clipsé puis coulissé dans les glissières de la semelle comme décrit ci-dessus.

Le fond du sabot comporte en outre au moins une butée dotée d'une surface d'allure perpendiculaire au plan de la semelle, orientée vers le talon de manipulation, et venant au contact d'au moins une surface du loquet parallèle et orientée en sens inverse, lorsque le sabot et le loquet sont solidarisés en translation.

De préférence, ces butées sont au nombre de deux, venant au contact de surfaces du loquet disposées entre la pièce élastique de la butée escamotable et les patins latéraux.

Elles ont une double fonction : d'une part, elles évitent que les plots utilisés pour la fixation principalement en translation du loquet dans le sabot soient soumis à des contraintes trop importantes pouvant les rompre notamment lors de leur fixation l'un dans l'autre. Elles permettent ensuite de répercuter au loquet les efforts transmis par le rail au sabot notamment lors du serrage des bornes de connexion, lesdits efforts étant ensuite répercutés à la semelle par la butée transversale au contact des contrebutées.

Dans l'invention, les patins axiaux, la pièce élastique formant butée escamotable et la portion de loquet dotée de la butée transversale de blocage / déblocage de la position verrouillée sur le rail sont reliés à un élément central d'allure transversale présentant au moins un contact avec la semelle et les parois du sabot, et immobilisé entre eux.

Selon une configuration, le contact avec la semelle est réalisé par deux plots situés dans l'alignement des parois latérales axiales de la pièce élastique formant butée escamotable. Leur fonction principale est de limiter la course de ladite butée et d'éviter ainsi sa surcompression et la détérioration qu'elle impliquerait.

Cet élément central est en fait le repère relatif par rapport auquel se déplacent la butée escamotable et la butée transversale des moyens de blocage / déblocage. Il assure l'immobilisation du loquet, lorsque le système de l'invention est monté sur un appareil modulaire, dans une dimension non axiale.

Les contrebutées de la semelle sont disposées à l'extrémité extérieure des deux murets axiaux parallèles qui forment la paroi externe de chaque glissière de la semelle, la surface centrale séparant lesdits murets étant dans le même plan que la surface de la semelle au contact des bordures du rail.

Au cours du coulissement, lesdites contrebutées se déplacent, relativement au loquet, de la butée transversale vers des butées marquant la fin de la course du système, le trajet séparant lesdites butées comportant deux reliefs successifs formant points durs lors du déplacement.

Les trois positions stables du loquet sont donc
- position verrouillée (stabilisée par les butées) : tenue du produit sur le rail ;
- position déverrouillée intermédiaire (stabilisée par un point dur entrant en contact avec les contrebutées) permettant le démontage habituel du disjoncteur sans mise en porte-à-faux du loquet ;
- position grande course (stabilisée également par un point dur) permettant le démontage du produit ponté.

Le système coulissant est donc limité dans sa course d'une part par l'extrémité de la glissière, et maintenu en cette position par les moyens de blocage / déblocage, et d'autre part par la ou les butées de fin de course disposées sur le loquet.

L'invention va à présent être décrite plus en détail, en se référant notamment aux figures jointes, pour lesquelles :
- les figures 1a à 1e représentent, avec un loquet de fixation schématisé, le problème posé dans le cadre de l'invention ;
- la figure 2 est une perspective du système de l'invention, avec le loquet monté dans le sabot ;
- la figure 3 montre une vue en perspective du sabot seul ;
- la figure 4 représente, toujours en perspective, le loquet seul ;
- la figure 5 est une vue de côté de la partie de la semelle de l'appareil modulaire comportant les glissières de coulissement ; et
- la figure 6 illustre le montage du système de l'invention sur ladite semelle.

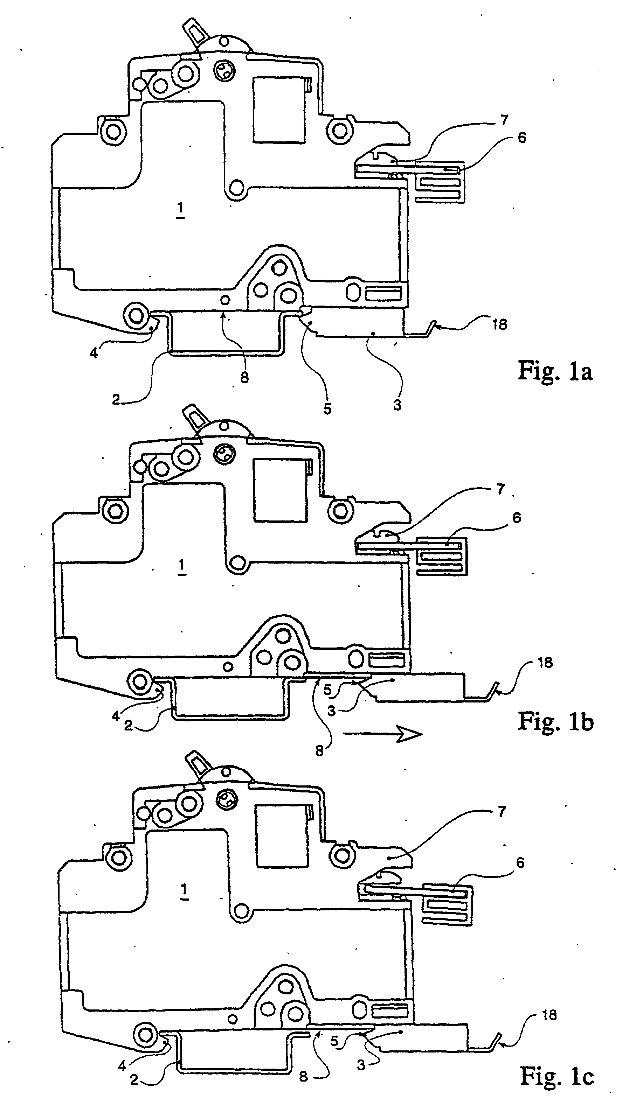

D'une figure à l'autre, les mêmes références sont attribuées aux mêmes éléments en vue de clarifier la lecture. Ainsi, dans les figures 1a à 1d, l'appareil électrique modulaire standard, en l'occurrence un disjoncteur, est référencé (1) et représenté en position verrouillée sur un rail normalisé (2) à l'aide d'un loquet (3). A ce stade, et pour les besoins de l'explication, il n'est pas nécessaire d'entrer dans des détails techniques de réalisation du loquet, qui est schématisé pour figurer le fonctionnement qu'on en attend dans le contexte spécifique posé auparavant.

Lorsque le rail (2) et le disjoncteur (1) sont solidarisés, un relief (4) comportant une encoche permet de loger l'une des bordures externes du rail (2), l'autre étant clipsée dans la butée escamotable (5) du loquet (3). Un peigne de pontage (6) est connecté à une borne (7) du disjoncteur (1).

Le rôle du loquet (3) à grande course est de dégager une surface supplémentaire de la semelle (8), lorsqu'il est en position déverrouillée (voir en figure 1b), pour que le disjoncteur (1) puisse être déplacé en sens inverse de la flèche symbolisant le sens de coulissement du loquet (3). Avant cela, il convient cependant de déconnecter préalablement le peigne de pontage (6) en dévissant la vis de la borne de connexion (7), ainsi que cela est représenté en figure 1c.

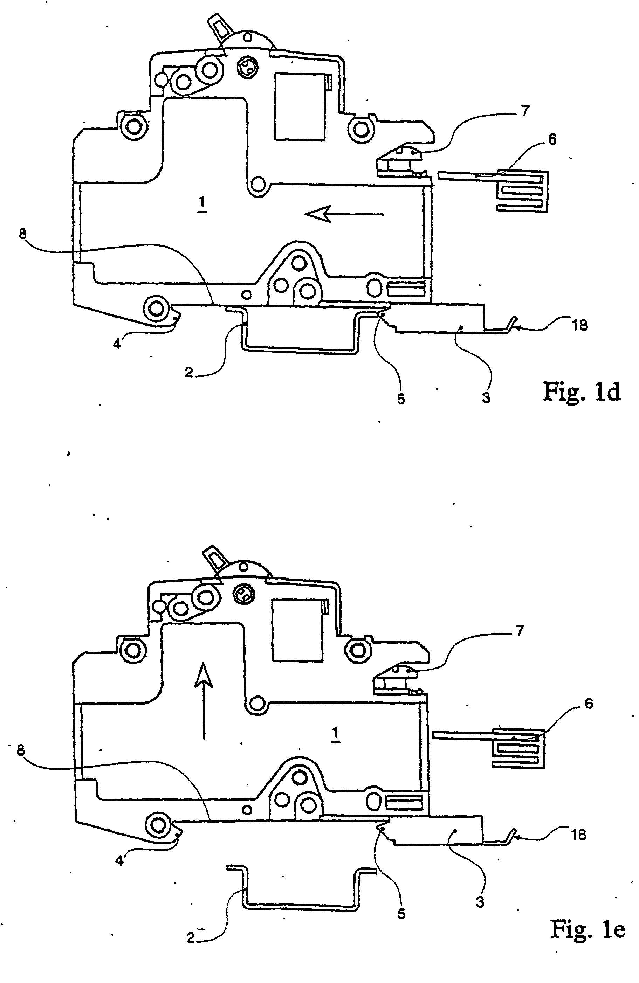

La phase de coulissement inverse du disjoncteur (1) est représentée en figure 1d. Le peigne (6) est alors dégagé de la borne (7), et les bordures externes d'accrochage du rail (2) ne sont plus retenues par l'encoche du relief (4) et par la butée escamotable du loquet (3). Il est dès lors possible d'extraire le disjoncteur, ainsi que cela apparaît en figure 1e.

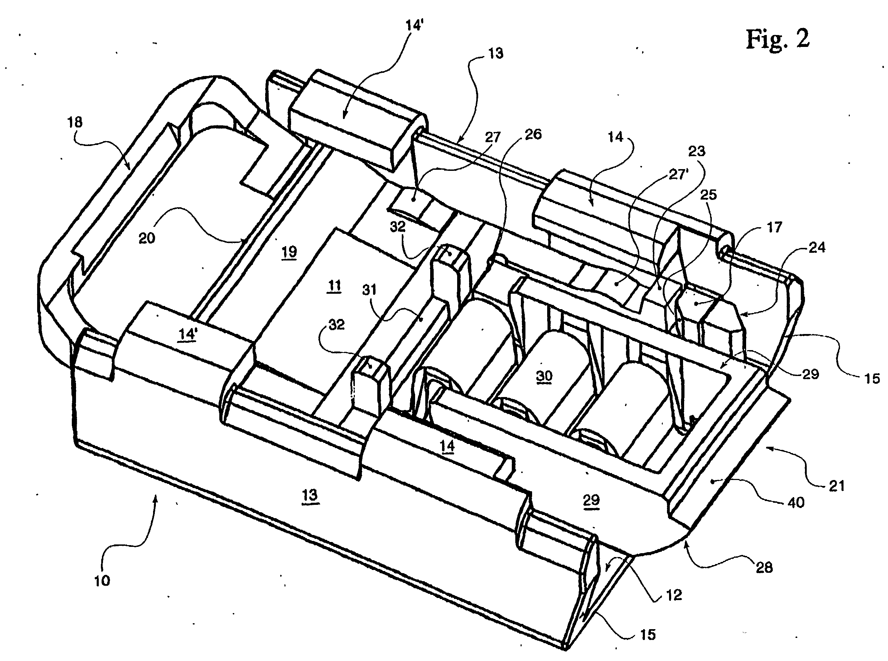

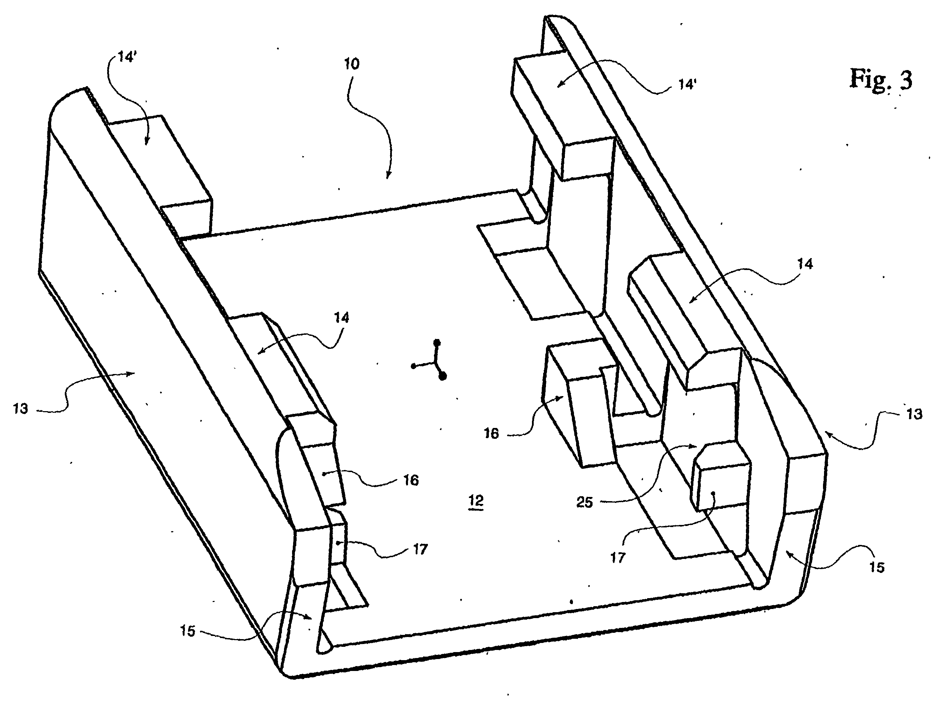

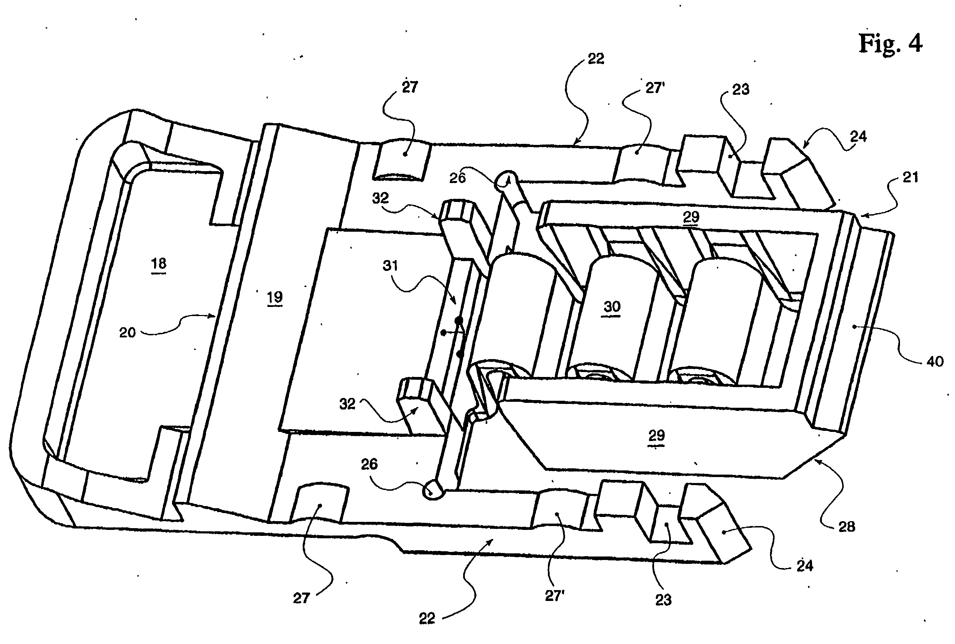

La figure 2 montre l'invention proprement dite, comportant le sabot (10) dans lequel est disposé fixe en translation le loquet (11), ces deux éléments apparaissant, isolés, respectivement en figure 3 et en figure 4, auxquelles on se référera simultanément.

Ledit sabot (10) comporte un fond (12) et deux parois latérales (13) surmontées de rebords rentrants (14, 14') prévus pour être insérés dans des glissières latérales externes de la semelle (8) (voir ci-après). La longueur d'au moins un de ces rebords (14, 14') ainsi que celle de l'évidement qui les sépare, a une importance que l'on mettra en évidence ultérieurement, et qui est relative au montage du système dans les glissières de la semelle (8).

Les chants latéraux frontaux (15) du sabot (10) sont situés à proximité, voire au contact, du rail (2) en situation de verrouillage du disjoncteur sur ce dernier. A ce titre, ils sont susceptibles d'encaisser des efforts exercés par ledit rail (2). Le sabot comporte encore des butées (16) dont le rôle est précisément de répercuter ces efforts au loquet (11) et des plots (17) dépassant des parois latérales (13), servant à la fixation du loquet (11) dans le sabot (10). Ces derniers présentent une symétrie par rapport à un plan médian perpendiculaire au fond (12) du sabot (10).

Le loquet (11) est doté d'un talon (18) de manipulation, accessible depuis l'extérieur du boîtier du disjoncteur (voir figure 1), manipulable par exemple à l'aide d'un tournevis. Ce talon (18) termine une portion du loquet (11) de moindre épaisseur, présentant notamment une butée transversale (19) dotée d'une face (20) d'allure perpendiculaire au fond (12) du sabot (10) et à la semelle (8). Compte tenu de la nature du matériau utilisé, de type plastique, cette portion est flexible autour d'un axe virtuel localisé au niveau de la jointure avec la portion plus épaisse. Une rotation élastique est donc possible, la position de repos étant celle qui est représentée aux figures 2 et 4.

L'autre portion principale du loquet (11) comporte un organe élastique central (21) flanqué latéralement de deux patins (22). Ces derniers comportent un logement (23) prévu pour recevoir le plot (17). La liaison s'effectue par clipsage. A cet effet, les patins comportent. une surface externe (24) perpendiculaire au fond du sabot (10) qui est chanfreinée, et orientée à l'inverse d'une surface biseautée (25) de chaque plot (17), ces surfaces étant prévues pour glisser l'une sur l'autre au montage du loquet (11) dans le sabot. Les patins (22) doivent donc être fléchis élastiquement vers l'intérieur, ce que permettent la nature du matériau, des évidements d'allure cylindrique (26) situés à la base des patins (22) du côté du fléchissement, et l'espace résiduel entre les patins (22) et l'organe central (21).

Entre la butée transversale (19) et les parois des logements (23), des reliefs (27, 27') sont prévus pour servir de points durs lors du déplacement relatif de contrebutées de la semelle (voir ci-après) par rapport à l'ensemble loquet (11) / sabot (10).

L'organe élastique central (21) constitue en fait la butée escamotable, par l'intermédiaire d'une paroi frontale (28) dotée d'un bec (40) qui joue le rôle de l'encoche d'un relief amovible, correspondant fonctionnellement au relief (4) de la semelle (8).

La paroi frontale (28) et deux parois latérales (29) entourent un élément élastique (30) formant ressort. Ce dernier est constitué d'ondulations identiques, d'amplitude sensiblement égale à la hauteur des parois (28, 29) et reliés au niveau du fond (12) du sabot (10) d'une part à la paroi frontale (28) de l'organe (21), et d'autre part à une portion centrale (31) d'allure transversale du loquet (11). Cette portion (31) se distingue du reste car elle remplit une fonction particulière. Elle est en effet la partie qui complète notamment l'immobilisation du loquet relativement au sabot (10), car les deux plots (32) et leur support transversal ont une épaisseur sensiblement égale à la distance séparant le fond (12) du sabot (10) de la semelle (8), et empêchent ainsi toute torsion du loquet (11) dans le sabot (10), l'immobilisation en translation étant par ailleurs assurée par les couples logement (23) / plot (17). Il est à noter que ces derniers assurent aussi, en principe, l'immobilisation en rotation, à l'une des extrémités du loquet. Mais leur structure et leur emplacement ne suffisent pas à assurer un maintien correct. Les plots (32), comme déjà mentionné, évitent par ailleurs la surcompression de la butée escamotable (21).

Par ailleurs, la hauteur des parois (28, 29) de l'organe central (21) permet d'enlever un degré de liberté audit organe (21), puisqu'un guidage intervient entre la semelle (8) et. le fond (12) du sabot (10). Ce guidage, ou maintien, est indispensable, car si les efforts exercés par le rail (2) avaient pour effet de déformer le ressort (30) en rotation autour d'un axe transversal au loquet (11) situé à la jonction du ressort (30) et de la portion centrale (31), la rupture à ce niveau se produirait rapidement. En l'occurrence, des efforts sont répercutés aux glissières de la semelle (8) par les rebords (14, 14') du sabot (10).

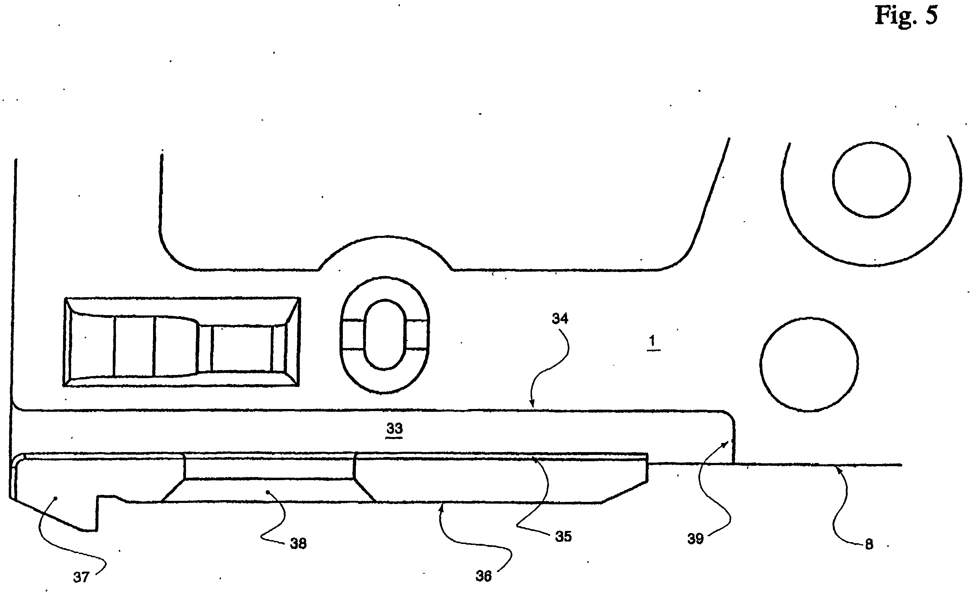

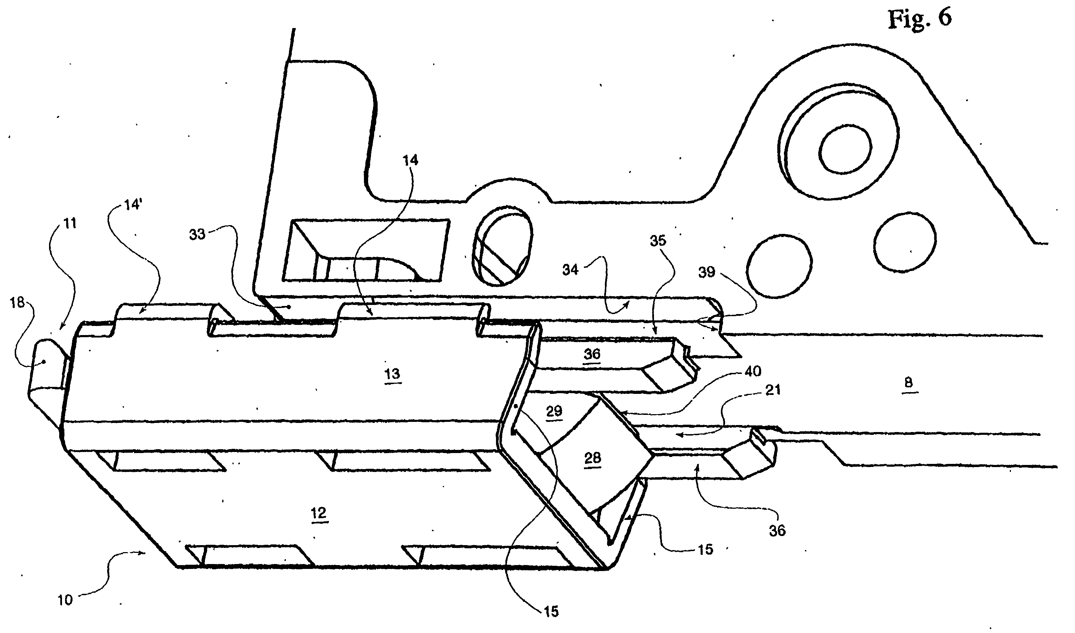

La figure 5 montre la partie de la semelle (8) supportant le système de fixation de la figure 2, en vue de côté, faisant apparaître l'une des deux glissières (33) latérales. Cette glissière (33) comporte une paroi interne (34) et une paroi externe (35) appartenant à un muret (36) (mieux représenté en figure 6). Ce dernier comprend la contrebutée (37) coopérant en position de verrouillage avec la surface (20) de la butée transversale (19) du loquet (11). Une encoche (38) biseautée est pratiquée dans ledit muret (36), dont la longueur permet l'insertion élastique du rebord (14) surmontant la paroi verticale (13) du sabot (10). La surface biseautée est prévue pour coopérer avec une surface orientée inversement, également biseautée, du rebord (14). L'insertion du système représenté en figure 2 se fait par clipsage dudit rebord (14) dans l'encoche (38). Les parois verticales (13) s'écartent donc l'une de l'autre au moment de l'insertion, puis reviennent élastiquement au repos lorsque le muret (36) est franchi.

La contrebutée (37) a également pour fonction de limiter la course de l'ensemble sabot / loquet, par contact avec la surface verticale suivant le point dur (27'). A l'inverse, la paroi (39) formant l'extrémité interne de la glissière marque l'arrêt dudit ensemble, en position rentrée au contact du rail (2).

La figure 6 représente le système de fixation de l'invention en position intermédiaire, monté sur le disjoncteur. Le sabot (10) coulisse dans les glissières (33) entre les deux positions externes précitées. En position verrouillée, le rail (2) est clipsé entre le bec (40) et la semelle (8) et la butée transversale (19) est bloquée au contact des contrebutées (37). Lorsqu'on débloque cette dernière liaison en faisant pivoter la butée transversale (19) par rotation de la portion de loquet (11) qui la contient par rapport à la portion centrale (31) dudit loquet (11), en exerçant une action sur le talon (18) à l'aide d'un outil adéquat, le coulissement peut avoir lieu.

Les plans inclinés inversés des contrebutées (37) et de la butée transversale (19), combinés à l'élasticité du matériau, permettent le reblocage en fin de coulissement en sens inverse.

Dans cette position, le clipsage du disjoncteur (1) sur le rail n'implique le déplacement que de la butée escamotable (21). Il est à noter que les déplacements du sabot (10) avec son loquet (11), de la butée (19) de blocage / déblocage et de la butée escamotable (21) sont actionnables indépendamment l'un de l'autre. L'absence d'interférence entre les fonctions améliore considérablement l'ergonomie du système de l'invention.

Les contrebutées (37), lorsqu'elles se déplacent relativement au loquet (11), passent par les deux point durs (27, 27') qui précèdent les positions stables verrouillée et déverrouillée. Il est à noter que les liaisons entre le loquet (11) et le sabot (10) d'une part, le système et les glissières d'autre part, sont en principe indémontables du fait de l'effet de clipsage.

La description qui précède ne constitue bien entendu qu'un exemple non limitatif de l'invention. Celle-ci englobe au contraire les variantes de forme et de structure contenues dans le domaine de protection tracé par les revendications annexées.

## Revendications

1. Système de fixation pour appareil électrique modulaire (1) à un rail profilé (2) à deux bordures d'accrochage coopérant avec des moyens de fixation (3, 4) situés sur la semelle (8) dudit appareil (1), comprenant d'une part un relief (4) doté d'une encoche s'adaptant sur l'une des bordures, et d'autre part ledit système mobile (3) en translation entre une position verrouillée dans laquelle une butée escamotable (21) permet la fixation par clipsage de l'appareil (1) sur le rail (2), et une position déverrouillée dans laquelle ladite butée (21) est coulissée à distance du rail (2) à l'aide d'un talon de manipulation (18), afin que l'appareil (1) puisse être déplacé en sens inverse du coulissement en vue de le démonter dudit rail (2), au moins un élément élastique du système coopérant lors de chaque déplacement du système avec la semelle de l'appareil, **caractérisé en ce que** ledit système comporte un sabot (10) coulissant dans des glissières (33) pratiquées dans la semelle (8), dans lequel est fixé un loquet (11) muni d'une butée élastique (21) escamotable de clipsage sur le rail (2) capable d'un mouvement relatif par rapport au sabot (10) indépendant du coulissement de ce dernier par rapport à la semelle (8).

2. Système de fixation pour appareil électrique modulaire (1) à un rail profilé (2) selon la revendication 1, **caractérisé en ce que** le loquet (11) est muni de moyens élastiques (19, 20) de blocage / déblocage de la position verrouillée, dont les déplacements relativement au sabot (10) sont indépendants du coulissement dudit sabot (10) et du déplacement axial de la butée escamotable (21).

3. Système de fixation pour appareil électrique modulaire (1) à un rail profilé (2) selon l'une des revendications 1 et 2, **caractérisé en ce que** ledit sabot (10) présente une section d'allure en U dont les deux parois latérales (13) sont surmontées au moins partiellement de rebords (14, 14') s'étendant vers l'intérieur du sabot (10), en vue de coopérer avec des glissières (33) s'ouvrant latéralement dans la semelle (8) de l'appareil modulaire (1), une extrémité desdites glissières (33) s'arrêtant à proximité du rail (2) et l'autre extrémité débouchant dans la face de l'appareil (1) munie d'une borne de connexion (7), la longueur du sabot (10) et des glissières (33) étant sensiblement identique.

4. Système de fixation pour appareil électrique modulaire (1) à un rail profilé (2) selon la revendication précédente, **caractérisé en ce que** le rebord de chaque paroi latérale du sabot est configuré en deux portions distinctes (14, 14'), séparées par une zone qui en est dépourvue, l'une au moins des deux portions (14, 14') et la zone sans rebord ayant une longueur correspondant respectivement au plus à la longueur d'une encoche (38) pratiquée dans un muret (36) contenant la paroi externe (35) de la glissière (33) intégrée à la semelle (8) et au moins à la longueur d'une portion contiguë de ladite paroi (35) afin de permettre leur insertion par clipsage dans la glissière (33) perpendiculairement au plan de la semelle (8).

5. Système de fixation pour appareil électrique modulaire (1) à un rail profilé (2) selon la revendication précédente, **caractérisé en ce que** seule la portion de rebord (14) rentrant placée du côté de la butée escamotable (21) du loquet (11) est prévue pour s'insérer dans l'encoche (38) de la paroi (35) de la glissière (33), dont la portion contiguë distale de ladite butée (21) est de longueur correspondant au plus à celle de la zone sans rebord du sabot (10).

6. Système de fixation pour appareil électrique modulaire (1) à un rail profilé (2) selon la revendication précédente, **caractérisé en ce que** ladite portion de rebord (14) et l'encoche (38) de la glissière (33) sont munies de deux surfaces en regard chanfreinées, orientées inversément pour venir au contact l'une de l'autre et permettre un guidage lors de l'insertion du premier dans la seconde.

7. Système de fixation pour appareil électrique modulaire (1) à un rail profilé (2) selon l'une quelconque des revendications 2 à 6, **caractérisé en ce que** les moyens de blocage / déblocage de la position verrouillée sur le rail (2) consistent en au moins une butée transversale (19) équipant la portion du loquet (11) munie à l'une de ses extrémités du talon de manipulation (18), l'autre extrémité présentant une liaison de pivotement élastique avec une partie (31) du corps du loquet (11) immobilisée entre le sabot (10) et la semelle (8), ladite ou lesdites butées (19) coopérant au repos avec au moins une contrebutée (37) correspondante pratiquée dans la semelle (8).

8. Système de fixation pour appareil électrique modulaire (1) à un rail profilé (2) selon la revendication précédente, **caractérisé en ce que** les moyens de blocage / déblocage comportent une butée transversale (10) présentant une surface (20) d'allure perpendiculaire au plan de la semelle (8), orientée vers le talon de manipulation (18), coopérant avec deux surfaces parallèles orientée en sens inverse des deux contrebutées (37) de la semelle (8), ces dernières étant situées aux deux extrémités transversales de ladite semelle (8).

9. Système de fixation pour appareil électrique modulaire (1) à un rail profilé (2) selon l'une quelconque des revendications précédentes, **caractérisé en ce que** la butée escamotable de clipsage sur le rail est une pièce élastique (21) dont l'extrémité libre dépasse de l'enveloppe formée par le sabot (10), et est configurée pour autoriser un déplacement élastique rectiligne dans la direction axiale de la semelle (8).

10. Système de fixation pour appareil électrique modulaire (1) à un rail profilé (2) selon la revendication précédente, **caractérisé en ce que** ladite pièce (21) comporte deux parois latérales axiales (29) perpendiculaires au plan de la semelle (8) et une paroi frontale (28) formant un bec (40), dont une surface est au contact du rail (2) de fixation, lesdites parois (28, 29) entourant un organe élastique (30) axial formant ressort, et présentant une hauteur égale à la distance séparant le sabot (10) de la semelle (8).

11. Système de fixation pour appareil électrique modulaire (1) à un rail profilé (2) selon la revendication précédente, **caractérisé en ce que** l'organe élastique (30) formant ressort est un ruban de matériau synthétique d'épaisseur constante, d'une seule pièce avec lesdites parois latérales (29) et frontale (28), présentant des ondulations d'amplitude égale à la hauteur des parois (28, 29).

12. Système de fixation pour appareil électrique modulaire (1) à un rail profilé (2) selon la revendication précédente, **caractérisé en ce que** l'organe élastique (30) formant ressort est d'une seule pièce avec le reste du loquet (11), auquel il est raccordé, ainsi qu'à la paroi frontale (28), au niveau du sommet d'une ondulation disposé au contact du fond (12) du sabot (10).

13. Système de fixation pour appareil électrique modulaire (1) à un rail profilé (2) selon l'une quelconque des revendications 3 à 12, **caractérisé en ce que** les moyens de fixer en translation le loquet (11) dans le sabot (10) comportent au moins deux plots (17) dépassant des parois latérales (13) du sabot (10) vers l'intérieur de celui-ci, et s'insérant dans des logements (23) correspondants du loquet (11).

14. Système de fixation pour appareil électrique modulaire (1) à un rail profilé (2) selon la revendication précédente, **caractérisé en ce que** lesdits plots (17) sont au nombre de deux, disposés l'un en face de l'autre à proximité de l'extrémité du sabot (10) située dans la zone d'accrochage au rail (2).

15. Système de fixation pour appareil électrique modulaire (1) à un rail profilé (2) selon la revendication précédente, **caractérisé en ce que** les logements (23) du loquet (11) sont pratiqués dans deux patins (22) latéraux axiaux disposés au contact du fond (12) du sabot (10) de part et d'autre de la pièce élastique (21) formant butée escamotable et au contact des parois latérales (13) dudit sabot (10), lesdits patins (22) étant munis à leur extrémité libre d'une surface (24) externe chanfreinée perpendiculaire au plan de la semelle (8), destinée à coopérer avec une surface des plots en regard biseautée selon une orientation inverse pour réaliser une flexion desdits patins (22) vers l'intérieur et effectuer la liaison par clipsage de chaque plot (17) dans son logement (23) correspondant.

16. Système de fixation pour appareil électrique modulaire (1) à un rail profilé (2) selon l'une quelconque des revendications précédentes, **caractérisé en ce que** le fond (12) du sabot (10) comporte au moins une butée (16) dotée d'une surface d'allure perpendiculaire au plan de la semelle (8), orientée vers le talon de manipulation (18), et venant au contact d'au moins une surface du loquet (10) parallèle et orientée en sens inverse lorsque le sabot (10) et le loquet (11) sont solidarisés en translation.

17. Système de fixation pour appareil électrique modulaire (1) à un rail profilé (2) selon la revendication précédente, **caractérisé en ce que** les butées (16) sont au nombre de deux, venant au contact de surfaces du loquet (11) disposées entre la pièce élastique (21) de la butée escamotable et les patins latéraux (22).

18. Système de fixation pour appareil électrique modulaire (1) à un rail profilé (2) selon l'une quelconque des revendications 15 à 17, **caractérisé en ce que** les patins axiaux (22), la pièce élastique (21) formant butée escamotable et la portion de loquet dotée de la butée transversale (19) de blocage / déblocage de la position verrouillée sur le rail (2) sont reliés à un élément central (31) d'allure transversale présentant au moins un contact avec la semelle et les parois du sabot, et immobilisé entre eux.

19. Système de fixation pour appareil électrique modulaire (1) à un rail profilé (2) selon la revendication précédente, **caractérisé en ce que** le contact avec la semelle (8) est réalisé par deux plots (32) situés dans l'alignement des parois latérales (29) axiales de la pièce élastique (21) formant butée escamotable, évitant au surplus la surcompression de la pièce élastique (21).

20. Système de fixation pour appareil électrique modulaire (1) à un rail profilé (2) selon l'une quelconque des revendications 8 à 19, **caractérisé en ce que** les contrebutées (37) de la semelle (8) sont disposées à l'extrémité extérieure des deux murets (36) axiaux parallèles, la surface centrale séparant lesdits murets (31) étant dans le même plan que la surface de la semelle (8) au contact des bordures du rail (2).

21. Système de fixation pour appareil électrique modulaire (1) à un rail profilé (2) selon la revendication précédente, **caractérisé en ce que**, au cours du coulissement, lesdites contrebutées (37) se déplacent relativement au loquet (11), de la butée transversale (19) vers des butées marquant la fin de la course du système, le trajet séparant lesdites butées comportant deux reliefs successifs (27, 27') formant points durs lors du déplacement.

22. Application du système de fixation selon les revendications précédentes à un appareil électrique modulaire de type disjoncteur.

## Patentansprüche

1. Befestigungssystem für modulares elektrisches Gerät (1) an einer Profilschiene (2) mit zwei Einhakleisten, die mit Befestigungsmitteln (3, 4) zusammenwirken, die sich an der Sohle (8) des Geräts (1) befinden, umfassend einerseits ein Relief (4), das mit einer Kerbe versehen ist, die an eine der Leisten angepaßt ist, und andererseits das System (3), das translatorisch zwischen einer verriegelten Position, in der ein einfahrbarer Anschlag (21) die Befestigung durch Einrasten des Geräts (1) an der Schiene (2) ermöglicht, und einer entriegelten Position, in der der Anschlag (21) mit Hilfe eines Betätigungsstegs (18) von der Schiene (2) weggeschoben ist, damit das Gerät (1) in entgegengesetzter Gleitrichtung verschoben werden kann, um es von der Schiene (2) abzunehmen, beweglich ist, wobei wenigstens ein elastisches Element des Systems bei jeder Verschiebung des Systems mit der Sohle des Geräts zusammenwirkt, **dadurch gekennzeichnet**, daß das System einen Schuh (10) aufweist, der in in der Sohle (8) ausgebildeten Gleitschienen (33) gleitet und in dem eine Klinke (11) befestigt ist, die mit einem einfahrbaren elastischen Anschlag (21) für eine Einrastung an der Schiene (2) versehen ist, der sich relativ zum Schuh (10) unabhängig von dessen Gleitbewegung in bezug auf die Sohle (8) bewegen kann.

2. Befestigungssystem für modulares elektrisches Gerät (1) an einer Profilschiene (2) nach Anspruch 1, **dadurch gekennzeichnet**, daß die Klinke (11) mit elastischen Mitteln (19, 20) zur Blockierung/Freigabe der verriegelten Position versehen ist, deren Verschiebungen relativ zum Schuh (10) von der Gleitbewegung des Schuhs (10) und von der axialen Verschiebung des einfahrbaren Anschlags (21) unabhängig sind.

3. Befestigungssystem für modulares elektrisches Gerät (1) an einer Profilschiene (2) nach einem der Ansprüche 1 und 2, **dadurch gekennzeichnet**, daß der Schuh (10) einen Querschnitt mit U-förmigem Verlauf aufweist, von dessen zwei Seitenwänden (13) wenigstens teilweise Ränder (14, 14') vorstehen, die sich in den Schuh (10) hinein erstrecken, um mit Gleitschienen (33) zusammenzuwirken, die sich in der Sohle (8) des modularen Geräts (1) seitlich öffnen, wobei ein Ende der Gleitschienen (33) in der Nähe der Schiene (2) endet und das andere Ende in die Fläche des Geräts (1) mündet, die mit einem Verbindungsanschluß (7) versehen ist, wobei die Länge des Schuhs (10) und der Gleitschienen (33) im wesentlichen gleich ist.

4. Befestigungssystem für modulares elektrisches Gerät (1) an einer Profilschiene (2) nach dem vorhergehenden Anspruch, **dadurch gekennzeichnet**, daß der Rand jeder Seitenwand des Schuhs aus zwei verschiedenen Abschnitten (14, 14') aufgebaut ist, die durch eine Zone getrennt sind, in der er nicht vorhanden ist, wobei wenigstens einer der zwei Abschnitte (14, 14') und die Zone ohne Rand eine Länge besitzen, die höchstens der Länge einer Kerbe (38), die in einer die äußere Wand (35) der in die Sohle (8) integrierten Gleitschiene (33) enthaltenden Trennwand (36) ausgebildet ist, bzw. wenigstens der Länge eines an die Wand (35) angrenzenden Abschnitts entspricht, um ihr Einschieben durch Einrasten in die Gleitschiene (33) senkrecht zur Ebene der Sohle (8) zu ermöglichen.

5. Befestigungssystem für modulares elektrisches Gerät (1) an einer Profilschiene (2) nach dem vorhergehenden Anspruch, **dadurch gekennzeichnet**, daß nur der Abschnitt des Randes (14), der sich auf seiten des einfahrbaren Anschlags (21) der Klinke (11) befindet, dazu vorgesehen ist, in die Kerbe (38) der Wand (35) der Gleitschiene (33) eingeschoben zu werden, wobei der distale angrenzende Abschnitt des Anschlags (21) eine Länge besitzt, die höchstens jener der Zone ohne Rand des Schuhs (10) entspricht.

6. Befestigungssystem für modulares elektrisches Gerät (1) an einer Profilschiene (2) nach dem vorhergehenden Anspruch, **dadurch gekennzeichnet**, daß der Abschnitt des Randes (14) und die Kerbe (38) der Gleitschiene (33) mit zwei gegenüberliegenden angefasten Oberflächen versehen sind, die entgegengesetzt orientiert sind, um in gegenseitigen Kontakt zu gelangen und eine Führung beim Einschieben des ersteren in die letztere zu ermöglichen.

7. Befestigungssystem für modulares elektrisches Gerät (1) an einer Profilschiene (2) nach einem der Ansprüche 2 bis 6, **dadurch gekennzeichnet**, daß die Mittel zum Blockieren/Freigeben der verriegelten Position an der Schiene (2) wenigstens aus einem transversalen Anschlag (19) bestehen, mit dem der Abschnitt der Klinke (11) ausgerüstet ist, der an einem seiner Enden mit dem Betätigungssteg (18) versehen ist, wobei das andere Ende eine elastische Schwenkverbindung mit einem Teil (31) des Körpers der Klinke (11) aufweist, der zwischen dem Schuh (10) und der Sohle (8) unbeweglich ist, wobei der oder die Anschläge (19) in ihrer Ruhestellung mit wenigstens einem entsprechenden Gegenanschlag (37), der in der Sohle (8) ausgebildet ist, zusammenwirken.

8. Befestigungssystem für modulares elektrisches Gerät (1) an einer Profilschiene (2) nach dem vorhergehenden Anspruch, **dadurch gekennzeichnet**, daß die Blockierungs-/Freigabemittel einen transversalen Anschlag (10) umfassen, der eine Oberfläche (20) mit einem zur Ebene der Sohle (8) senkrechten Verlauf aufweist, die zum Betätigungssteg (18) gerichtet ist und mit zwei parallelen Oberflächen zusammenwirkt, die in der zu den beiden Gegenanschlägen (37) der Sohle (8) entgegengesetzten Richtung orientiert sind, wobei diese letzteren sich an den beiden transversalen Enden der Sohle (8) befinden.

9. Befestigungssystem für modulares elektrisches Gerät (1) an einer Profilschiene (2) nach einem der vorhergehenden Ansprüche, **dadurch gekennzeichnet**, daß der einfahrbare Anschlag für die Einrastung an der Schiene ein elastisches Teil (21) ist, dessen freies Ende über die durch den Schuh (10) gebildete Hülle vorsteht und der so beschaffen ist, daß er eine geradlinige elastische Verschiebung in der axialen Richtung der Sohle (8) zuläßt.

10. Befestigungssystem für modulares elektrisches Gerät (1) an einer Profilschiene (2) nach dem vorhergehenden Anspruch, **dadurch gekennzeichnet**, daß das Teil (21) zwei axiale Seitenwände, die zur Ebene der Sohle (8) senkrecht sind, und eine vordere Wand (28), die einen Schnabel (40) bildet und wovon eine Oberfläche mit der Befestigungsschiene (2) in Kontakt ist, umfaßt, wobei die Wände (28, 29) ein axiales elastisches Organ (30), das eine Feder bildet, umgeben und eine Höhe besitzen, die gleich dem Abstand ist, der den Schuh (10) von der Sohle (8) trennt.

11. Befestigungssystem für modulares elektrisches Gerät (1) an einer Profilschiene (2) nach dem vorhergehenden Anspruch, **dadurch gekennzeichnet**, daß das eine Feder bildende elastische Organ (30) ein Kunststoffband mit konstanter Dicke ist, das einteilig mit den Seitenwänden (29) und der vorderen Wand (28) ausgebildet ist und Welligkeiten aufweist, deren Amplitude gleich der Höhe der Wände (28, 29) ist.

12. Befestigungssystem für modulares elektrisches Gerät (1) an einer Profilschiene (2) nach dem vorhergehenden Anspruch, **dadurch gekennzeichnet**, daß das eine Feder bildende elastische Organ (30) mit der restlichen Klinke (11), mit der es verbunden ist, sowie mit der vorderen Wand (28) auf Höhe des Scheitels einer Welle, die sich mit dem Boden (12) des Schuhs (10) in Kontakt befindet, einteilig ausgebildet ist.

13. Befestigungssystem für modulares elektrisches Gerät (1) an einer Profilschiene (2) nach einem der Ansprüche 3 bis 12, **dadurch gekennzeichnet**, daß die Mittel für die translatorische Befestigung der Klinke (11) im Schuh (10) wenigstens zwei Klötze (17) umfassen, die von den Seitenwänden (13) des Schuhs (10) in dessen Innenraum vorstehen und in die entsprechenden Aufnahmesitze (23) der Klinke (11) eingeschoben sind.

14. Befestigungssystem für modulares elektrisches Gerät (1) an einer Profilschiene (2) nach dem vorhergehenden Anspruch, **dadurch gekennzeichnet**, daß die Klötze (17) in der Anzahl zwei vorhanden sind und in der Nähe des Endes des Schuhs (10), das sich in der Einhakzone der Schiene (2) befindet, einander gegenüber angeordnet sind.

15. Befestigungssystem für modulares elektrisches Gerät (1) an einer Profilschiene (2) nach dem vorhergehenden Anspruch, **dadurch gekennzeichnet**, daß die Aufnahmesitze (23) der Klinke (11) in zwei axialen seitlichen Haken (22) ausgebildet sind, die mit dem Boden (12) des Schuhs (10) beiderseits des den einfahrbaren Anschlag bildenden elastischen Teils (21) und in Kontakt mit den Seitenwänden (13) des Schuhs (10) angeordnet sind, wobei die Haken (22) an ihrem freien Ende mit einer angefasten äußeren Oberfläche (24) versehen sind, die zur Ebene der Sohle (8) senkrecht ist und dazu bestimmt ist, mit einer gegenüberliegenden Oberfläche der Ansätze, die in einer entgegengesetzten Orientierung facettiert ist, zusammenzuwirken, um eine Biegung der Haken (22) nach innen zu verwirklichen und um die Verbindung durch Einrasten jedes Klotzes (17) in seinem entsprechenden Aufnahmesitz (23) zu bewirken.

16. Befestigungssystem für modulares elektrisches Gerät (1) an einer Profilschiene (2) nach einem vorhergehenden Ansprüche, **dadurch gekennzeichnet**, daß der Boden (12) des Schuhs (10) wenigstens einen Anschlag (16) umfaßt, der mit einer Oberfläche mit einem zur Ebene der Sohle (8) senkrechten Verlauf versehen ist, die zum Betätigungssteg (18) gerichtet ist und mit wenigstens einer parallelen und entgegengesetzt orientierten Oberfläche der Klinke (10) in Kontakt gelangt, wenn der Schuh (10) und die Klinke (11) translatorisch fest sind.

17. Befestigungssystem für modulares elektrisches Gerät (1) an einer Profilschiene (2) nach dem vorhergehenden Anspruch, **dadurch gekennzeichnet**, daß die Anschläge (16) in der Anzahl zwei vorhanden sind und mit Oberflächen der Klinke (11) in Kontakt gelangen, die zwischen dem elastischen Teil (21) des einfahrbaren Anschlags und den seitlichen Haken (22) angeordnet sind.

18. Befestigungssystem für modulares elektrisches Gerät (1) an einer Profilschiene (2) nach einem der Ansprüche 15 bis 17, **dadurch gekennzeichnet**, daß die axialen Ansätze (22), das den einfahrbaren Anschlag bildende elastische Teil (21) und der mit dem transversalen Anschlag (19) für die Blockierung/Freigabe der verriegelten Position an der Schiene (2) versehene Abschnitt der Klinke mit einem zentralen Element (31) verbunden sind, das einen transversalen Verlauf besitzt und wenigstens einen Kontakt mit der Sohle und mit den Wänden des Schuhs aufweist und zwischen diesen unbeweglich ist.

19. Befestigungssystem für modulares elektrisches Gerät (1) an einer Profilschiene (2) nach dem vorhergehenden Anspruch, **dadurch gekennzeichnet**, daß der Kontakt mit der Sohle (8) durch zwei Klötze (32) verwirklicht ist, die auf die axialen Seitenwände (29) des den einfahrbaren Anschlag bildenden elastischen Teils (21) ausgerichtet sind und darüber hinaus eine zu starke Kompression des elastischen Teils (21) vermeidet.

20. Befestigungssystem für modulares elektrisches Gerät (1) an einer Profilschiene (2) nach einem der Ansprüche 8 bis 19, **dadurch gekennzeichnet**, daß die Gegenanschläge (37) der Sohle (8) am äußeren Ende der beiden parallelen axialen Trennwände (36) angeordnet sind, wobei die mittlere Oberfläche, die die beiden Trennwände (31) trennt, in derselben Ebene wie die Oberfläche der Sohle (8) in Kontakt mit den Rändern der Schiene (2) ist.

21. Befestigungssystem für modulares elektrisches Gerät (1) an einer Profilschiene (2) nach dem vorhergehenden Anspruch, **dadurch gekennzeichnet**, daß sich während des Gleitens die Gegenanschläge (37) relativ zur Klinke (11) vom transversalen Anschlag (19) zu den das Ende der Bahn des Systems markierenden Anschlägen bewegen, wobei die Bahn, die die Anschläge trennt, zwei aufeinanderfolgende Reliefs (27, 27') enthält, die bei der Bewegung harte Punkte bilden.

22. Anwendung des Befestigungssystems nach den vorhergehenden Ansprüchen auf ein modulares elektrisches Gerät des Typs Schaltautomat.

## Claims

1. Fixing system for modular electrical apparatus (1) to a section rail (2) with two catching edges co-operating with fixing means (3, 4) situated on the bottom (8) of the said apparatus (1), comprising on the one hand a relief (4) provided with a notch fitting onto one of the edges, and on the other the said system (3) mobile in translation between a locked position in which a retractable stop (21) permits fixing by snapping of the apparatus (1) onto the rail (2), and a unlocked position in which the said stop (21) is slid at a distance from the rail (2) by means of a handling clip (18), so that the apparatus (1) can be displaced in the opposite direction to the sliding in order to disassemble it from the said rail (2), at least one elastic element of the system co-operating at each displacement of the system with the bottom of the apparatus, characterised by the fact that the said system includes a shoe (10) sliding in slideways (33) formed in the bottom (8), in which is fixed a catch (11) provided with a retractable elastic stop (21) for snapping onto the rail (2) capable of a relative movement with regard to the shoe (10) independent of the sliding of the latter relative to the bottom (8).

2. Fixing system for modular electrical apparatus (1) to a section rail (2) as described in claim 1, characterised by the fact that the catch (11) is provided with elastic means (19, 20) for locking/releasing the locked position, the displacements of which relative to the shoe (10) are independent of the sliding of the said shoe (10) and of the axial displacement of the retractable stop (21).

3. Fixing system for modular electrical apparatus (1) to a section rail (2) as described in one of claims 1 and 2, characterised by the fact that the said shoe (10) has a U-shaped section the two lateral walls (13) of which are topped at least partially by flanges (14, 14') extending towards the inside of the shoe (10), in order to co-operate with slideways (33) opening laterally in the bottom (8) of the modular apparatus (1), one end of the said slideways (33) stopping in the vicinity of the rail (2) and the other end opening into the face of the apparatus (1) provided with a connection terminal (7), the lengths of the shoe (10) and the slideways (33) being substantially identical.

4. Fixing system for modular electrical apparatus (1) to a section rail (2) as described in the preceding claim, characterised by the fact that the flange of each lateral wall of the shoe is configured in two distinct portions (14, 14'), separated by a zone which has none, one at least of the two portions (14, 14') and the zone without a flange having a length corresponding respectively at most to the length of a notch (38) formed in a low wall (36) containing the outer wall (35) of the slideway (33) incorporated in the bottom (8) and at least to the length of a contiguous portion of the said wall (35) in order to allow their snap-in insertion into the slideway (33) perpendicularly to the plane of the bottom (8).

5. Fixing system for modular electrical apparatus (1) to a section rail (2) as described in the preceding claim, characterised by the fact that only the portion of the inwardly turned flange (14) placed on the side of the retractable stop (21) of the catch (11) is provided to be inserted in the notch (38) in the wall (35) of the slideway (33), of which the distal contiguous portion of the said stop (21) is of a length corresponding at the most to that of the zone without a flange of the shoe (10).

6. Fixing system for modular electrical apparatus (1) to a section rail (2) as described in the preceding claim, characterised by the fact that the said portion of flange (14) and the notch (38) in the slideway (33) are provided with two facing bevelled surfaces, oppositely oriented to come into contact with each other and permit guiding on insertion of the first into the second.

7. Fixing system for modular electrical apparatus (1) to a section rail (2) as described in any one of claims 2 to 6, characterised by the fact that the locking/releasing means of the locked position on the rail (2) consist of at least a transversal stop (19) with which is equipped the portion of the catch (11) provided at one of its ends with the handling clip (18), the other end having an elastic pivoting connection with a part (31) of the body of the catch (11) immobilised between the shoe (10) and the bottom (8), the said stop or stops (19) co-operating at rest with at least one corresponding counter-stop (37) formed in the bottom (8).

8. Fixing system for modular electrical apparatus (1) to a section rail (2) as described in the preceding claim, characterised by the fact that the locking/releasing means include a transversal stop (10) having a surface (20) perpendicular to the plane of the bottom (8), oriented towards the handling clip (18), co-operating with two parallel surfaces oriented in the opposite direction of two counter-stops (37) of the bottom (8), these latter being situated at the two transversal ends of the said bottom (8).

9. Fixing system for modular electrical apparatus (1) to a section rail (2) as described in any one of the preceding claims, characterised by the fact that the retractable stop for snapping onto the rail is an elastic piece (21) the free end of which overlaps the casing formed by the shoe (10), and is configured to allow a rectilinear elastic displacement in the axial direction of the bottom (8).

10. Fixing system for modular electrical apparatus (1) to a section rail (2) as described in the preceding claim, characterised by the fact that the said piece (21) includes two axial lateral walls (29) perpendicular to the plane of the bottom (8) and a frontal wall (28) forming a nose (40), a surface of which is in contact with the fixing rail (2), the said walls (28, 29) surrounding an axial elastic organ (30) forming a spring, and having a height equal to the distance separating the shoe (10) from the bottom (8).

11. Fixing system for modular electrical apparatus (1) to a section rail (2) as described in the preceding claim, characterised by the fact that the elastic organ (30) forming a spring is a strip of synthetic material of constant thickness, in one piece with the said lateral (29) and frontal (28) walls, having undulations of amplitude equal to the height of the walls (28, 29).

12. Fixing system for modular electrical apparatus (1) to a section rail (2) as described in the preceding claim, characterised by the fact that the elastic organ (30) forming a spring is in one piece with the rest of the catch (11), to which it is attached, as well as to the frontal wall (28), at the level of the top of an undulation arranged in contact with the base (12) of the shoe (10).

13. Fixing system for modular electrical apparatus (1) to a section rail (2) as described in any one of claims 3 to 12, characterised by the fact that the means for fixing in translation the catch (11) in the shoe (10) include at least two blocks (17) extending beyond the lateral walls (13) of the shoe (10) inwardly of the latter, and being inserted in corresponding housings (23) of the catch (11).

14. Fixing system for modular electrical apparatus (1) to a section rail (2) as described in the preceding claim, characterised by the fact that the said blocks (17) are two in number, arranged one opposite the other in the vicinity of the end of the shoe (10) situated in the catching zone of the rail (2).

15. Fixing system for modular electrical apparatus (1) to a section rail (2) as described in the preceding claim, characterised by the fact that the housings (23) of the catch (11) are formed in two axial lateral slide blocks (22) arranged in contact with the base (12) of the shoe (10) on either side of the elastic piece (21) forming a retractable stop and in contact with the lateral walls (13) of the said shoe (10), the said slide blocks (22) being provided at their free end with a bevelled outer surface (24) perpendicular to the plane of the bottom (8), intended to co-operate with a surface of the facing blocks bevelled in an opposite orientation to form an inward flexing of the said slide blocks (22) and effect the snap-in connection of each block (17) into its corresponding housing (23).

16. Fixing system for modular electrical apparatus (1) to a section rail (2) as described in any one of the preceding claims, characterised by the fact that the base (12) of the shoe (10) includes at least one stop (16) provided with a surface perpendicular to the plane of the bottom (8), oriented towards the handling clip (18), and coming into contact with at least one parallel surface of the catch (10) and oriented in the opposite direction when the shoe (10) and the catch (11) are firmly attached in translation.

17. Fixing system for modular electrical apparatus (1) to a section rail (2) as described in the preceding claim, characterised by the fact that the stops (16) are two in number, coming into contact with surfaces of the catch (11) arranged between the elastic piece (21) of the retractable stop and the lateral slide blocks (22).

18. Fixing system for modular electrical apparatus (1) to a section rail (2) as described in any one of claims 15 to 17, characterised by the fact that the axial slide blocks (22), the elastic piece (21) forming a retractable stop and the portion of the catch provided with the transversal stop (19) for locking/releasing the locked position on the rail (2) are connected to a transversal central element (31) having at least a contact with the bottom and the walls of the shoe, and immobilised between them.

19. Fixing system for modular electrical apparatus (1) to a section rail (2) as described in the preceding claim, characterised by the fact that the contact with the bottom (8) is effected by two blocks (32) situated in the alignment of the lateral axial walls (29) of the elastic piece (21) forming a retractable stop, avoiding in addition the over compression of the elastic piece (21).

20. Fixing system for modular electrical apparatus (1) to a section rail (2) as described in any one of claims 8 to 19, characterised by the fact that the counter-stops (37) of the bottom (8) are arranged at the outer end of the two parallel axial low walls (36), the central surface separating the said low walls (31) being in the same plane as the surface of the bottom (8) in contact with the edges of the rail (2).

21. Fixing system for modular electrical apparatus (1) to a section rail (2) as described in the preceding claim, characterised by the fact that, during sliding, the said counter-stops (37) are displaced relative to the catch (11), from the transversal stop (19) towards stops marking the limit of travel of the system, the path separating the said stops including two successive reliefs (27, 27') forming hard points upon the displacement.

22. Application of a fixing system as described in the preceding claims to a modular electrical apparatus of the circuit-breaker type.
